# DEMANDE DE BREVET EUROPEEN

(11) **EP 3 425 555 A1**
(43) Date de publication de la demande: **09.01.2019**
(21) Numéro de dépôt: 17305867.8
(22) Date de dépôt: 04.07.2017
(51) Int. Cl.: G06K 9/00, G06Q 20/34

(54) **DISPOSITIF ELECTRONIQUE A CAPTEUR D'EMPREINTE BIOMETRIQUE POUR UNE ASSISTANCE A LA SAISIE OU LECTURE D'EMPREINTE DIGITALE**

(71) Demandeur: GEMALTO SA, 92190 Meudon (FR)
(72) Inventeur: MARTINEZ, Frédéric, 13881 GEMENOS Cedex (FR)

(57) **Abrégé**

L'invention concerne un dispositif électronique de contrôle comprenant un corps (2) ou un écran, un capteur d'empreinte (5) débouchant en surface(3) du corps ou au voisinage de l'écran, une première marque sur le corps ou affichée à l'écran pour assister à un premier positionnement (24) d'un doigt (6s, 6g) d'utilisateur à un premier endroit prédéterminé, pour saisir lesdites informations d'empreinte digitale.
Le dispositif est caractérisé en ce qu'il est configuré pour rendre visible et/ou tactile au moins une seconde marque (21-23) de positionnement au voisinage du capteur d'empreinte, ladite seconde marque conduisant à un second positionnement du doigt à un second endroit distinct du premier endroit prédéterminé.

L'invention concerne également un procédé et système pour une assistance à la saisie ou lecture d'empreinte digitale utilisant le dispositif électronique.

## Description

### Domaine de l'invention.

L'invention concerne un dispositif électronique de contrôle comprenant un corps ou un écran, un capteur d'empreinte, une première marque sur le corps ou affichée à l'écran pour assister à un premier positionnement d'un doigt d'utilisateur par rapport au capteur.

Elle concerne également un procédé et dispositif d'assistance à la saisie ou lecture d'empreinte digitale utilisant le dispositif ci-dessus.

L'invention concerne plus particulièrement les dispositifs électroniques équipés de capteur d'empreinte biométrique ou digitale. Ces dispositifs comprennent notamment des cartes bancaires multi composants, des dispositifs électroniques de communication (téléphone portable, tablettes, PDA assistant personnel, accessoires électroniques à porter tels que des montres communicantes), des dispositifs électroniques d'identification, authentification équipant notamment des véhicules, des portes d'accès physiques ou logiques à des bâtiments, pièces, locaux ou à des systèmes informatisés...

Ces dispositifs sont pour certains destinés à des transactions électroniques, notamment financières, telles que des achats qui peuvent être réalisés en ligne via internet sur des sites marchands, localement chez des commerçants à l'aide d'un terminal de paiement POS (Point of Sale Terminal en terminologie anglo-saxonne), des distributeurs automatiques de billets (DAB) ou ATM (Automatic Teller Machines en terminologie anglo-saxonne), des terminaux d'autoroute, des distributeurs automatiques de marchandises tels que carburant, boissons, etc., dans des restaurants d'entreprise, des magasins ....

### Art antérieur.

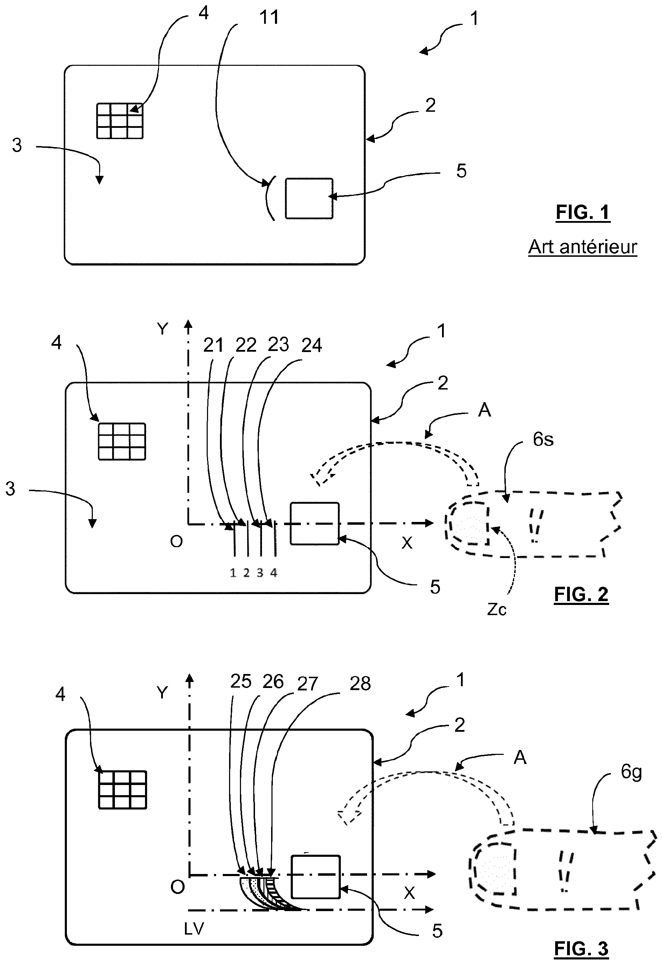

On connait des cartes bancaires notamment de la société MasterCard qui comprennent un capteur d'empreinte et un marquage en forme de ligne courbée à proximité du capteur (figure 1). Cette ligne semble être affectée à un positionnement d'un doigt d'un utilisateur.

Les capteurs de ces dispositifs sont relativement petits (de l'ordre de 1 X 1 cm).

### Problème technique.

L'authentification biométrique est de plus en plus populaire pour identifier les personnes et offrir des services plus pratiques: débloquer les téléphones par exemple ou les paiements sécurisés en remplaçant le code PIN traditionnel.

La vérification d'empreintes est la première étape importante vers une «démocratisation» biométrique et a été adoptée en grande partie par les smartphones (de marque Apple, Samsung). La vérification atteint maintenant des cartes de paiement et d'autres appareils (à porter sur soi) pour lesquels le marché devrait être massif.

D'autre part, il est connu que c'est la zone centrale du doigt qui contient le plus de détails (minuties) nécessaires à une vérification des empreintes digitales fiable. Cependant, la position naturelle du doigt lorsqu'un utilisateur saisit un objet n'est pas le centre du doigt.

L'un des problèmes perçu à l'avance par l'inventeur est une mauvaise expérience utilisateur à redouter due au fait que les utilisateurs ne présenteront pas leur doigt correctement sur le capteur d'empreinte digitale et qu'ensuite les vérifications correspondantes échoueront.

Ceci est d'autant plus à redouter que le capteur a des dimensions nettement plus petites que la surface inférieure d'un doigt.

En conséquence, l'inventeur pense que les utilisateurs ont besoin d'être éduqués ou assistés pour savoir où mettre leur doigt correctement notamment à la première utilisation, et, plus important encore, à se rappeler de cette position.

L'invention a pour objectif de résoudre les inconvénients susvisés ou besoin pressenti.
L'invention a pour objectif de proposer une manière simple et aisée permettant à un utilisateur de bien positionner son doigt et de s'en souvenir, le cas échéant.

### Résumé de l'invention.

L'invention prévoit une série d'indications visuelles / tactiles associées au dispositif (carte, portable, mobile ou tout autre objet) autour du capteur d'empreinte, de manière à:
- indiquer un positionnement recommandé du doigt sur un capteur ;
- montrer l'éventail des différentes positions en fonction de la taille des doigts et du motif d'empreinte digitale (le centre d'un doigt est différent d'une personne à l'autre).

L'invention peut comprendre des lignes (repères) différenciées ou non, avec par exemple des numéros (1, 2, 3, 4 ...), des lignes de différentes couleurs (bleu, jaune, rouge, ...) ou toute autre information de discrimination, pour identifier rapidement quel est le bon emplacement du doigt.

En outre, l'indication du positionnement de doigt doit permettre une mémorisation aisée pour faciliter les tentatives ultérieures d'identification.

A cet effet, l'invention a pour objet un dispositif électronique de contrôle comprenant un corps ou un écran, un capteur d'empreinte biométrique au voisinage du corps ou de l'écran, une première marque sur le corps ou affichée à l'écran pour assister à un premier positionnement d'un doigt d'utilisateur à un premier endroit prédéterminé, pour saisir lesdites informations d'empreinte digitale ;
Il est caractérisé en ce qu'il est configuré pour rendre visible et/ou tactile au moins une seconde marque de positionnement au voisinage du capteur d'empreinte, ladite seconde marque conduisant à un second positionnement du doigt à un second endroit distinct du premier endroit prédéterminé.

La marque peut être rendue visible ou tactile en permanence ou visible électroniquement lors d'une phase d'authentification notamment par un affichage de marque sur un écran du dispositif.

Selon d'autres caractéristiques :
- le capteur peut déboucher sur le corps du dispositif ou être au voisinage ou au niveau de l'écran, ou sur l'écran ; Par exemple, le capteur peut être en dehors de la partie affichage de l'écran et la marque peut faire partie de l'affichage notamment par ce que l'extrémité du doigt déborde sur la partie active de l'écran (sensible, tactile ou affichant des informations);
- Le marquage visuel et/ou tactile peut comprendre de préférence au moins trois marques (lignes, courbes, points, repères de positionnement du doigt) ;
- Le marquage visuel et/ou tactile comprend plusieurs lignes ou courbes ou points de positionnement du doigt différentiables ;
- Les marques, lignes ou courbes ou points de positionnement du doigt peuvent avoir des couleurs différentes les unes des autres ou une numérotation ;
- Les marques, lignes ou courbes ou points de positionnement du doigt peuvent être en relief, en creux ou sur épaisseur par rapport à une surface principale du corps de dispositif autour du capteur ;
- Les marques, lignes ou courbes ou points de positionnement du doigt peuvent avoir une texture différente (rugueuse, lisse,...) par rapport à une surface principale du corps de dispositif autour du capteur ;
- Les marques, lignes ou courbes ou points de positionnement du doigt en surépaisseur sont formées par une technique d'impression 3D parmi le jet d'encre ou de matière d'une épaisseur supérieure à 0,05 mm ;
- La surépaisseur desdites marques, lignes ou courbes ou points peut augmenter avec leur éloignement du capteur ;
- La surépaisseur desdites marques, lignes ou courbes ou points peut former un guidage ou repère de positionnement latéral et longitudinal du doigt ;
- Le dispositif comprend un programme (PA) d'assistance mettant en oeuvre une étape d'aide au positionnement du doigt d'un utilisateur pour la saisie biométrique d'initialisation ou de vérification quand le programme est exécuté par une unité de traitement électronique du dispositif.

L'invention a également pour objet un procédé d'assistance à la saisie ou lecture d'empreinte digitale comprenant:
- une étape initiale de saisie d'information d'empreinte digitale d'un doigt d'utilisateur et de mémorisation de tout ou partie de ces informations dans une mémoire d'un dispositif de contrôle d'empreinte digitale ou une mémoire liée à ce dispositif,
- une étape d'assistance au positionnement du doigt d'utilisateur à un premier endroit sur un capteur d'empreinte d'un dispositif à l'aide d'une première marque marquée (positionnée) ou affichée sur le corps ou l'écran du dispositif ;

Le procédé est caractérisé en ce qu'il comprend une étape de marquage visible et/ou tactile ou d'affichage d'au moins une seconde marque de positionnement au voisinage du capteur d'empreinte, ladite seconde marque conduisant à un second positionnement du doigt à un second endroit distinct du premier endroit.

L'invention a également pour objet un système d'assistance à la saisie ou à la lecture d'empreinte digitale, ledit système comprenant:
- des moyens de saisie d'information d'empreinte digitale d'un doigt d'utilisateur et de mémorisation de tout ou partie de ces informations dans une mémoire d'un dispositif de contrôle ou une mémoire liée à ce dispositif,
- un dispositif de contrôle comprenant un corps ou un écran et un capteur d'empreinte, et comprenant une première marque sur le corps ou affichée sur l'écran pour assister au positionnement d'un doigt d'utilisateur, pour saisir lesdites informations d'empreinte digitale, à un premier endroit prédéterminé ;
Le dispositif est caractérisé en ce qu'il est configuré pour rendre visible et/ou tactile au moins une seconde marque de positionnement au voisinage du capteur d'empreinte, ladite seconde marque conduisant à un second positionnement du doigt à un second endroit distinct du premier endroit prédéterminé.

Grâce à l'invention, les utilisateurs ont un moyen facile à comprendre pour positionner correctement leur doigt sur un capteur biométrique, améliorer l'efficacité d'un contrôle biométrique ou obtenir plus facilement des authentifications / vérifications biométriques réussies.
Dans le cas d'un écran notamment, l'invention peut prévoir d'afficher uniquement le marquage utile à un positionnement optimal (gagnant ou correct) d'un utilisateur parmi plusieurs possibles qui peuvent être préprogrammés dans un dispositif électronique de contrôle biométrique.

L'éducation d'un bon comportement d'utilisateur pour un contrôle efficace est plus rapide (un bon comportement n'est pas évident à la première utilisation). Il est ainsi facile de se rappeler la position correcte du doigt et il n'y a plus (ou du moins, il y a beaucoup moins) de risque de vérification négative.

### Brève description des figures.

- La figures 1 illustre un dispositif électronique conforme à l'art antérieur ;
- La figure 2 illustre un premier mode de réalisation du dispositif de l'invention ;
- La figure 3 illustre un second mode préféré de réalisation du dispositif de l'invention ;
- La figure 4 illustre une utilisation du dispositif de la figure 2 (premier mode) avec un petit doigt;
- La figure 5 illustre une utilisation du dispositif de la figure 2 (premier mode) avec un gros doigt;
- La figure 6 illustre une utilisation du dispositif de la figure 3 (second mode) avec un petit doigt;
- La figure 7 illustre une utilisation du dispositif de la figure 3 (second mode) avec un gros doigt;
- La figure 8 illustre un programme PA (ou des étapes) d'initialisation / assistance au positionnement de doigt pour authentification / vérification.

### Description.

A la figure 1 est illustré un dispositif électronique 1 conforme à l'art antérieur. Il s'agit ici d'une carte à puce (à contacts électriques et/ou sans contact) qui peut comporter ou non des plages de contact électriques 4 pour contacter un terminal de lecture.

Le dispositif 1 peut constituer ou comprendre un terminal de paiement, une clé USB, un ordinateur. Il comprend un corps 2 intégrant des circuits électroniques ou puce à circuit intégré et un capteur d'empreinte biométrique 5 débouchant en une surface 3 du corps. Le capteur 5 débouche ici sur une surface principale de la carte à puce 1. Il comprend des programmes de fonctionnement applicatif stockés en mémoire notamment EEPROM, flash notamment pour effectuer des opérations bancaires fidélité, d'identification, d'accès ou autres. Parmi les programmes peut se trouver également un programme de contrôle de données / informations biométriques. Ces programmes sont exécutés par une unité de traitement dans un des circuits électroniques ou une puce électronique à circuit intégré.

Le corps 2 comprend également un premier marquage 11 d'un premier positionnement d'un doigt 6 d'utilisateur par rapport au capteur 5. Le marquage 11 est ici matérialisé par une ligne courbée concave dont le creux est orienté vers le capteur 5 et centré sur une médiatrice OX du capteur 5 (médiatrice illustrée à la figure 2).

Les mêmes numéros de référence d'une figure à l'autre désignent des éléments / caractéristiques / constituants identiques ou similaires.

A la figure 2 est illustré un premier mode de réalisation du dispositif de l'invention qui peut reprendre les mêmes éléments ou constituants que ceux du dispositif de la figure précédente (à l'exception du marquage).

Selon une caractéristique d'un premier mode de réalisation de l'invention, le dispositif 1 comprend au moins un second marquage visuel et/ou tactile d'un second positionnement du doigt par rapport au capteur, ledit second positionnement étant distinct du premier.

Un premier marquage peut être constituée par un premier trait numéroté 4 ou référencé 24 (similaire à 11 de la figure 1). Un second marquage peut comprendre un second trait parmi un des traits parallèles 21 - 24 respectivement numéroté 1 sur le corps (référence 21), numéroté 2 sur le corps (référence 22) ou numéroté 3 sur le corps (référence 23).

Les traits 21-24 sont perpendiculaires à l'axe ou médiatrice OX du capteur. Ces traits 21-24 sont orientés parallèlement à l'axe OY. Les traits 21-24 ont tous une extrémité parvenant sensiblement jusqu'à l'axe OY correspondant à la médiatrice du capteur.

Cette extrémité constitue un repère qui permet à l'utilisateur de pointer le milieu du capteur et de faire correspondre le milieu (ou la médiane) de son doigt 6s (petit) ou 6g (gros) avec le milieu ou la médiane OX du capteur, lors de l'approche « flèche A » de son doigt 6s ou 6g.

A la figure 3 est illustré un second mode de réalisation du dispositif de l'invention qui peut reprendre les mêmes éléments ou constituants que ceux de la figure précédente (à l'exception du marquage).

La figure 3 diffère de la figure précédente en ce sens que les marques 21-24 (segments de droite) sont remplacées par les marques 25-28 (en forme de triangles courbés) dont la base coïncide avec l'axe OX et la pointe coïncide avec une ligne ou droite virtuelle « LV » parallèle à l'axe « OX » et séparé d'une distance correspondant sensiblement à une largeur moitié de doigt (environ 1 cm).
Les triangles sont remplis avec des motifs distincts les uns des autres pour les distinguer (hachures, densité de points, ou couleurs possible).

La ligne virtuelle « LV » peut constituer un repère de positionnement latéral du doigt en plus ou complémentaire de l'axe ou médiatrice OX. Chaque base des triangles 25-28 peut constituer un repère de positionnement du milieu du doigt (ou du capteur).

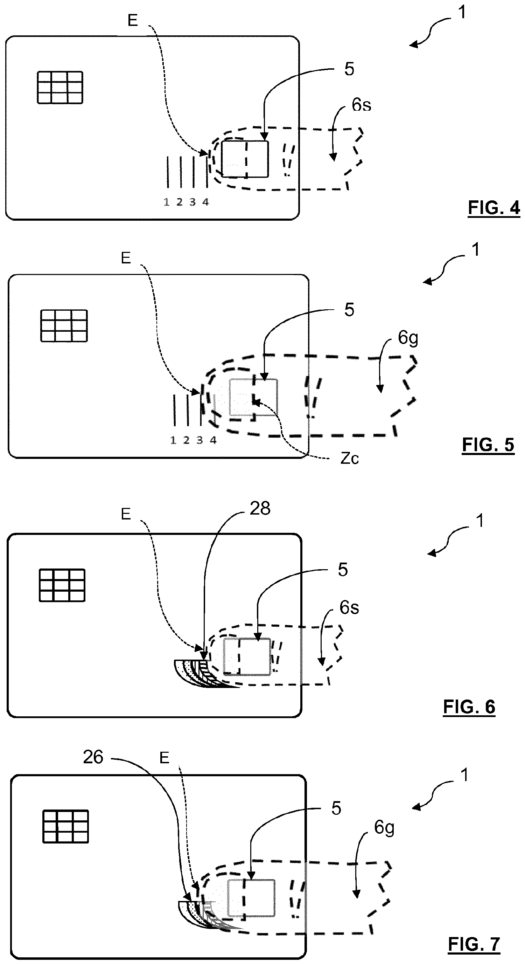

La figure 4 illustre une utilisation du dispositif de la figure 2 avec un petit doigt 6s. Le doigt 6s est ici dans une position optimale ou correcte permettant de faire coïncider avec le capteur d'empreinte 5, la zone de plus grands détails (ou zone de plus grandes minuties « Zc » contenant le plus de détails ou de minuties. Cette zone « Zc » peut être également appelée zone centrale du doigt ; Cette zone de plus grandes minuties est nécessaire à une vérification fiable des empreintes digitales et pour avoir plus de sécurité.

Par exemple, on dira pour l'explication de l'invention avec les dessins, que cette zone « Zc » peut être visiblement localisée sous le doigt sensiblement à l'aplomb de la ligne de l'ongle matérialisant sa pénétration sous la peau du doigt.

Dans cette position correcte, le doigt 6s a son extrémité « E » à l'aplomb d'une marque parmi la pluralité de marques 21-24. Ici, la marque 4 référencée 24 coïncide avec l'extrémité « E » du doigt.

La figure 5 illustre une utilisation du dispositif de la figure 2 avec un gros doigt 6g. L'utilisation et description de cette figure est identique à celle de la figure 4 à la différence que l'extrémité « E » du doigt 6g coïncide sensiblement avec une marque de positionnement distincte de celle de la figure 4.
En effet, dans la position correcte, le gros doigt 6g a également son extrémité « E » à l'aplomb d'une marque parmi la pluralité de marques 21-24. Cependant, ici, c'est la marque 3 référencée 23 qui coïncide avec l'extrémité « E » du doigt.

La figure 6 illustre une utilisation du dispositif préféré de la figure 3 avec un petit doigt 6s. L'utilisation et la description sont similaires à celle relative à la figure 4 ci-dessus mais à la différence que les marques sont différentes.
Dans la position correcte, le doigt 6s a son extrémité « E » à l'aplomb d'une marque parmi la pluralité de marques coniques incurvées 25-28. Ici, la marque conique incurvée 28 coïncide avec l'extrémité « E » du doigt.

La figure 7 illustre une utilisation du dispositif préféré de la figure 3 avec un gros doigt 6g. L'utilisation et description de cette figure est identique à celle de la figure précédente à la différence que l'extrémité « E » du gros doigt 6g coïncide sensiblement avec une marque de positionnement distincte de celle de la figure 6.

En effet, dans la position correcte, le gros doigt 6g a également son extrémité « E » à l'aplomb d'une marque parmi la pluralité de marques coniques incurvées 25-28. Cependant, ici, c'est la marque conique incurvée 26 qui coïncide avec l'extrémité « E » du doigt.

Il apparait clairement des figures précédentes que selon la morphologie des doigts 6s, 6g des personnes, il peut y avoir respectivement différentes positions correctes 24, 23 ou 25, 26 optimales pour saisir ou lire une empreinte digitale.
Il est clair que l'art antérieur de la figure 1 ne permettrait pas une saisie optimale de la zone Zc pour des doigts 6s et 6g.

L'invention permet donc de résoudre avantageusement de manière très simple le problème énoncé supra.

Selon une autre caractéristique pouvant s'appliquer à l'un quelconque des exemples, chaque marquage visuel et/ou tactile de positionnement peut comprendre ou être composé d'au moins deux lignes ou courbes de positionnement du doigt ou d'une manière générale de plusieurs lignes ou courbes ou de points de positionnement du doigt. Ces marques peuvent être de préférence facilement différentiables et/ou mémorisables les uns des autres par un utilisateur.

Par exemple, les marques, lignes ou courbes ou points de positionnement du doigt peuvent avoir des couleurs différentes les unes des autres ou une numérotation comme à la figure 2.

Selon une autre caractéristique, pouvant s'appliquer à l'un quelconque des exemples, chaque marque, lignes ou courbes (ou points) de positionnement du doigt peut être en relief, en creux ou en surépaisseur par rapport à une surface principale 3 du dispositif 1 autour du capteur 5.

Les reliefs peuvent être particulièrement utiles pour les malvoyants ou pour ajouter un moyen supplémentaire tactile de mémorisation.
A cet effet, l'invention peut utiliser tout moyen de réalisation d'un relief ou de creux, cavités...
En particulier, de préférence, les marques, lignes ou courbes ou points de positionnement du doigt en surépaisseur sont formées par une technique d'impression 3D tel que du jet d'encre

La surépaisseur obtenue par jet d'encre ou de matière 3D peut être par exemple d'une épaisseur supérieure à 0,05 mm.

La surépaisseur des marques, lignes ou courbes ou points peut augmenter ou réduire avec leur éloignement du capteur.

En complément, la surépaisseur des marques, lignes ou courbes ou points peut former un guidage ou repère de positionnement latéral et/ou longitudinal du doigt.

L'invention concerne également un procédé d'assistance à la saisie ou lecture d'empreinte digitale. Le procédé comprend les étapes suivantes:
- une étape initiale de saisie d'information d'empreinte digitale d'un doigt et de mémorisation de tout ou partie de ces informations dans une mémoire d'un dispositif de contrôle d'empreinte digitale ou une mémoire liée à ce dispositif.
- une étape d'assistance à un positionnement du doigt présenté par l'utilisateur, sur un capteur d'empreinte d'un dispositif conduisant à une vérification réussie.
Ces étapes peuvent faire l'objet d'un programme PA stocké totalement ou en partie dans le dispositif 1 de l'invention.

Par exemple, le dispositif 1 comprend une batterie et à la première utilisation, un utilisateur appose son doigt centré sur le capteur d'empreinte 5 de manière à saisir et mémoriser les minuties de la zone ZC de son doigt dans une mémoire du dispositif 1.

Alternativement, l'utilisateur peut alimenter le dispositif en énergie grâce à une connexion avec un lecteur à contact ou sans contact pendant la première utilisation ou initialisation.

L'utilisateur a mémorisé une des marques 21-24 ou 25-28 coïncidant avec l'extrémité « E » de son doigt.

Ainsi, la prochaine fois que l'utilisateur a besoin de s'authentifier avec son dispositif 1, il lui est aisé grâce aux marques de repérer la bonne marque et de positionner le doigt sensiblement de la même manière que lors de la saisie d'initialisation ou d'enrôlement afin d'effectuer une authentification. Ainsi, grâce à la pluralité de marques ou de repères, l'invention permet de mettre en oeuvre une étape d'assistance à un positionnement précis du doigt présenté par l'utilisateur sur le capteur d'empreinte du dispositif 1 et conduisant à une vérification réussie.

La pluralité de marques ou au moins deux marques permet ainsi d'assister l'utilisateur dans la saisie et/ou lecture de son empreinte digitale.

Alternativement, l'enrôlement ou saisie d'empreinte peut avoir été effectué au préalable par une autorité administrative ou privée dans un endroit quelconque officiel (préfecture, police, ambassade, entreprise...) préalablement ou en même temps que la fourniture du dispositif à l'utilisateur.
L'empreinte peut être mémorisée dans une mémoire du dispositif 1 lors d'une étape de personnalisation ou initialisation du dispositif.

Lors de la remise du dispositif à un utilisateur, l'utilisateur tente de s'authentifier (le cas échéant en présence ou non d'une personne qui est un administrateur du dispositif) sachant qu'il a le droit, par exemple, à trois essais avant verrouillage du dispositif pour des raisons de sécurité.

Donc, l'utilisateur tente de s'authentifier une première fois en positionnant son doigt sur le capteur et repère le marquage correspondant 24 repéré 4 sur le dispositif figure 4.

En cas de réussite de vérification d'authentification (message sur un écran du dispositif (non représenté) ou message sur un terminal coopératif (lecteur ou autre) en relation avec le dispositif, l'utilisateur conserve en mémoire la position correspondant à son authentification réussie et le procédé d'initialisation est terminé.

En cas d'échec d'authentification, l'utilisateur présente une seconde fois en positionnant son doigt sur le capteur et repère le marquage correspondant 23.
En cas de vérification réussite d'authentification (message sur un écran du dispositif), le réglage ou initialisation est terminé puisque l'utilisateur a mémorisé le bon emplacement du doigt par rapport aux différentes marques.

En cas d'échec, l'utilisateur recommence en déplaçant encore son doigt par rapport au capteur et ainsi de suite.

Ensuite, à chaque nouvelle authentification, l'utilisateur bénéficie d'une assistance / guidage grâce à la pluralité des marques du dispositif, dans le bon positionnement de son doigt.

L'invention comprend donc également un système d'assistance à la saisie ou à la lecture d'empreinte digitale. Le système comprend:
- des moyens de saisie (capteur 5 ou borne d'enrôlement d'un organisme officiel ou privé) d'information d'empreinte digitale d'un doigt d'utilisateur et de mémorisation (par exemple un circuit intégré associé, mémoire, disque dur, ROM, espace mémoire d'ordinateur ou de serveur central) de tout ou partie de ces informations dans une mémoire d'un dispositif de contrôle ou une mémoire liée à ce dispositif,
- un dispositif de contrôle (puce de carte à mémoire seul ou associé à serveur central local ou distant stockant les minuties des utilisateurs lors d'un enrôlement) ; Le dispositif peut comprendre un corps 2 et un capteur d'empreinte 5 ; Il comprend une première marque 24 ou 25 et au moins une seconde marque visuelle 21-23 ou 26-28 et/ou tactile correspondant respectivement à un premier 24 et second positionnement 21-23 ou 26-28 de l'extrémité E1 du doigt par rapport au capteur 5 ou par rapport à chaque marque 21-23 ou 26-28, ledit second positionnement 21-23 ou 26-28 étant distinct du premier 24 ou 25.

De préférence, les différents positionnements s'effectuent le long de l'axe longitudinal OX ou LV.

Le cas échéant, l'invention peut prévoir d'avoir différents positionnements ou marques le long de l'axe OY perpendiculairement à OX pour un centrage éventuel complémentaire ou supplémentaire par rapport à l'axe ou médiatrice OX.

Dans le cas où le dispositif comprend un capteur sur un écran d'affichage tactile, les marques, lignes, courbes, points peuvent être affichées, notamment à l'instant de l'authentification, plutôt qu'être physiquement réalisés (comme sur une carte à puce standard).

Le cas échéant, seule la marque utilisée pour déterminer un positionnement gagnant du doigt peut être affichée parmi plusieurs possibles.

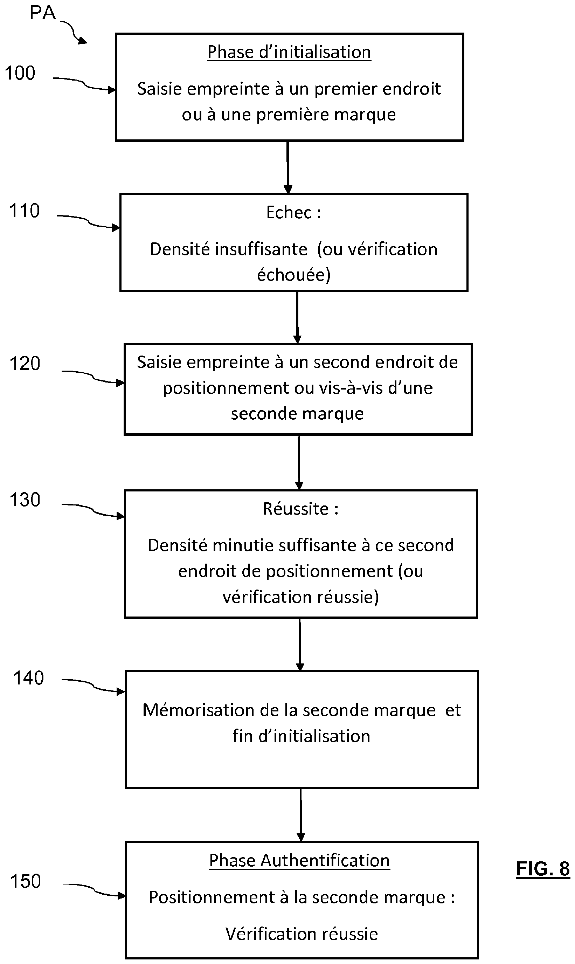

A la figure 8 est illustré un programme PA (ou des étapes correspondantes) d'initialisation et/ou d'assistance au positionnement de doigt pour authentification / vérification. Ce programme est par exemple stocké au moins en partie dans une mémoire permanente du dispositif.

Le dispositif peut comprendre un programme PA dans une mémoire permanente, pour réaliser les étapes du procédé d'assistance au positionnement de doigt susvisé.

Pour une initialisation (ou une vérification), l'invention peut prévoir une étape d'affichage d'une première marque à un premier endroit et demander à l'utilisateur, par émission d'une instruction notamment visuelle ou orale, de positionner le doigt par rapport à cette marque (étape 100). La marque peut être de différentes formes quelconques (ligne, courbe, segment de droite, points,...) ou combinaison des mêmes ou comme les exemples ci-dessus.

Pour la vérification, le programme peut requérir par une instruction émise à l'attention de l'utilisateur de positionner son doigt par rapport à la même première marque ayant servi à la saisie d'initialisation.

A l'étape 110, si la vérification (ou l'initialisation densité minutie insuffisante) n'est pas couronnée de succès, (ce qui est le cas ici dans l'exemple), le programme PA peut afficher une seconde marque distincte de la première et demande à l'utilisateur de présenter son doigt par rapport à cette seconde marque pour avoir un positionnement différent du doigt (par exemple avancé ou reculé de 1 à 3 mm ou de 2 à 4 mm selon l'axe longitudinal du doigt (et axe OX du capteur) par rapport au positionnement relatif à la première marque et ainsi de suite jusqu'à ce que la vérification soit réussie.
A l'étape 120 est illustré ce second positionnement de doigt pour une seconde saisie d'initialisation (ou de vérification) ;

A l'étape suivante, si pas de succès, le programme peut demander à l'utilisateur de procéder à une nouvelle initialisation à l'aide d'une autre marque. (Cette autre marque peut être affichée à l'instant de la saisie ou visible en permanence).

A l'étape 130, il se produit une initialisation (minutie suffisante) ou vérification réussie ;

A l'étape 140, le programme mémorise cette seconde marque comme marque d'assistance à sélectionner ou afficher à l'écran du dispositif. (Si pas d'écran, l'utilisateur mémorise cette marque ;

Ensuite, à l'étape 150, et à chaque vérification ou authentification, c'est cette seconde marque (utilisée pour l'initialisation ou vérification réussie) qui sera affichée (ou utilisée) pour assister l'utilisateur au positionnement de son doigt.

Le programme PA peut déterminer si la saisie initiale (à l'initialisation) comprend ou non suffisamment de minuties (concentration, densité de minuties) pour permettre un niveau / degré / de sécurité suffisant.

Dans le cas contraire (peu de minuties ou échec de vérification), le dispositif peut requérir une nouvelle saisie sur le dispositif ou un autre dispositif ou installation de saisie d'un organisme officiel ou privé. Les minuties peuvent être transférées ou stockées dans une mémoire de données du dispositif pour comparaison ou vérification ultérieure.

Comme déjà indiqué, si la densité de minuties est jugée insuffisante par le programme d'évaluation de la sécurité, le programme PA peut requérir une autre saisie d'empreinte digitale à un positionnement décalé par rapport à un précédent. Le programme PA (quand il est exécuté par une unité de traitement logique du dispositif) fait alors procéder à un affichage d'une nouvelle ou seconde marque décalée de quelques millimètres par rapport à une première marque ayant servi de repère de positionnement à une première saisie d'initialisation et prompt l'utilisateur de saisir l'empreinte de son doigt sur le capteur.

La partie de programme d'évaluation de la densité de minuties du programme PA n'est pas obligatoire pour déterminer qu'il y a suffisamment de minuties. L'évaluation peut par exemple être remplacée par un test de vérification subséquent à une saisie d'empreinte.

L'évaluation peut être implicite en cas d'échec de vérification. Le programme peut alors requérir d'initialiser avec des positionnements différents des précédents pour chaque nouvelle initialisation. Le programme peut aussi requérir de vérifier les minuties avec des positionnements différents jusqu'à trouver le bon. Le programme PA peut demander à l'utilisateur de se souvenir de la marque de positionnement ayant conduit à une saisie réussie que ce soit pour l'initialisation (enrôlement) ou vérification.

## Revendications

1. Dispositif électronique de contrôle comprenant un corps (2) ou un écran, un capteur d'empreinte (5) débouchant en surface(3) du corps ou au voisinage de l'écran, une première marque sur le corps ou affichée à l'écran pour assister à un premier positionnement (24) d'un doigt (6s, 6g) d'utilisateur à un premier endroit prédéterminé, pour saisir lesdites informations d'empreinte digitale,
**caractérisé en ce qu'**il est configuré pour rendre visible et/ou tactile au moins une seconde marque (21-23) de positionnement au voisinage du capteur, ladite seconde marque conduisant à un second positionnement du doigt à un second endroit distinct du premier endroit prédéterminé.

2. Dispositif selon la revendication précédente, **caractérisé en ce que** ledit marquage visuel et/ou tactile comprend au moins deux lignes ou courbes (21-23, 25-28) de positionnement du doigt (6s, 6g).

3. Dispositif selon l'une des revendications précédentes, **caractérisé en ce que** ledit marquage visuel et/ou tactile comprend au moins trois lignes ou courbes (21-23, 25-28) de positionnement du doigt.

4. Dispositif selon l'une des revendications précédentes, **caractérisé en ce que** ledit marquage visuel et/ou tactile comprend plusieurs lignes ou courbes (21-23, 25-28) ou points de positionnement du doigt différentiables.

5. Dispositif selon l'une des revendications précédentes, **caractérisé en ce que** lesdites lignes ou courbes (21-23, 25-28) ou points de positionnement du doigt ont des couleurs ou des motifs différents les unes des autres ou une numérotation.

6. Dispositif selon l'une des revendications précédentes, **caractérisé en ce que** lesdites lignes ou courbes (21-23, 25-28) ou points de positionnement du doigt sont en relief, en creux ou sur épaisseur par rapport à une surface principale (3) du corps (2) de dispositif autour du capteur (5).

7. Dispositif selon la revendication précédente, **caractérisé en ce que** lesdites lignes ou courbes (21-23, 25-28) ou points de positionnement du doigt en surépaisseur sont formées par une technique d'impression 3D, parmi le jet d'encre ou jet de matière d'une épaisseur supérieure à 0,05 mm

8. Dispositif selon l'une des revendications 6 ou 7, **caractérisé en ce que** la surépaisseur desdites lignes ou courbes ou points augmente avec leur éloignement du capteur.

9. Dispositif selon l'une des revendications précédentes, **caractérisé en ce que** la surépaisseur desdites lignes ou courbes ou points forment un guidage ou repère de positionnement latéral (LV, OX) et longitudinal du doigt.

10. Dispositif selon l'une des revendications précédentes, **caractérisé en ce qu'**il comprend un programme (PA) d'assistance mettant en oeuvre une étape d'aide au positionnement du doigt d'un utilisateur pour la saisie biométrique d'initialisation ou de vérification quand le programme est exécuté par une unité de traitement du dispositif.

11. Procédé d'assistance à la saisie ou lecture d'empreinte digitale comprenant:
- une étape initiale (100) de saisie d'information d'empreinte digitale d'un doigt (6s, 6g) d'utilisateur et de mémorisation de tout ou partie de ces informations dans une mémoire d'un dispositif (1) de contrôle d'empreinte digitale ou une mémoire liée à ce dispositif,
- une étape d'assistance au positionnement du doigt d'utilisateur à un premier endroit sur un capteur d'empreinte d'un dispositif, à l'aide d'une première marque (24) affichée ou marquée sur le corps ou l'écran du dispositif,
**caractérisé en ce qu'**il comprend une étape de marquage visible et/ou tactile ou d'affichage d'au moins une seconde marque (21-23) de positionnement au voisinage du capteur, ladite seconde marque conduisant à un second positionnement du doigt à un second endroit distinct du premier endroit.

12. Système d'assistance à la saisie ou à la lecture d'empreinte digitale, ledit système comprenant:
- des moyens de saisie (4, 5, PA) d'information d'empreinte digitale d'un doigt d'utilisateur et de mémorisation de tout ou partie de ces informations dans une mémoire d'un dispositif de contrôle ou une mémoire liée à ce dispositif,
- un dispositif de contrôle comprenant un corps (2) ou un écran et un capteur d'empreinte (5), et comprenant une première marque (24) sur le corps ou affichée sur l'écran pour assister au positionnement d'un doigt d'utilisateur, pour saisir lesdites informations d'empreinte digitale, à un premier endroit,
**caractérisé en ce qu'**il est configuré (PA) pour rendre visible et/ou tactile au moins une seconde marque (21- 23) de positionnement au voisinage du capteur d'empreinte, ladite seconde marque conduisant à un second positionnement du doigt à un second endroit distinct du premier endroit prédéterminé.
